# EUROPEAN PATENT APPLICATION

(11) **EP 2 784 920 A2**
(43) Date of publication of application: **01.10.2014**
(21) Application number: 14161316.6
(22) Date of filing: 24.03.2014
(51) Int. Cl.: H02K 41/03

(54) **Linear motor**

(30) Priority: 26.03.2013 JP 2013064382
(71) Applicant: Sanyo Denki Co., Ltd., Tokyo 170-8451 (JP)
(72) Inventor: Tang, Yuqi, Toshima-ku, Tokyo 170-8451 (JP); Sugita, Satoshi, Toshima-ku, Tokyo 170-8451 (JP)
(74) Representative: McCartney, Jonathan William

(57) **Abstract**

A linear motor comprises an exciter that includes a plurality of permanent magnets in a shaft, an armature that surrounds the exciter and includes a plurality of coils, and a frame that houses the armature, wherein the armature houses the plurality of coils in a magnetic tube which has a linear opening.

## Description

### BACKGROUND

### 1. Technical Field

The present invention relates to a linear motor that applies a linear thrust to a target to be driven by electromagnetic induction.

### 2. Description of Related Art

A linear motor is small in size and operable at high speed compared with mechanical actuation such as a ball screw mechanism since it operates by using electromagnetic induction. For example, a rod type linear motor is used for a chip mounter (an electronic component mounting device) of a semiconductor manufacturing device. The rod type linear motor includes a rod that includes permanent magnets and coils that surround the rod, and is configured to apply a thrust in the axis direction to the rod by using electromagnetic induction of a magnetic field of the permanent magnets and an electric current flowing in the coils so as to move the rod in a linear motion.

As a technique relating to the rod type linear motor, a linear motor is disclosed in which coils are inserted in an integrally formed housing and then resin-molded (For example, see International Publication No. 2007/026566).

Further, a linear motor is disclosed in which air-core coils are connected to a connection plate and then resin-molded (For example, see Japanese Unexamined Patent Application Publication No. 2007-097295).

Further, a linear motor is disclosed in which coils and spacers are integrally formed by resin molding and their outer periphery is surrounded by a substantially cylindrical frame which is provided with a processing section for a coil lead wire (For example, see Japanese Unexamined Patent Application Publication No. 2009-159752).

Moreover, a linear motor unit is disclosed in which a plurality of rod type linear motors having permanent magnets are arranged side by side with magnetic shield plates interposed between adjacent rod type linear motors (For example, see Japanese Patent No. 4580847).

Further, a linear motor module is disclosed in which a magnetic pipe is used as a back yoke to prevent a magnetic effect between adjacent linear motors (For example, see Japanese Patent No. 4385406).

According to the above technique disclosed in International Publication No. 2007/026566, Japanese Unexamined Patent Application Publication No. 2007-097295, and Japanese Unexamined Patent Application Publication No. 2009-159752, the manufacturing process is complicated since resin molding is performed by resin injection using a mold to secure the coils and fabricate the armature section. Further, a space for connection of coil lead wires is also necessary. Accordingly, it is difficult to achieve a low cost and high performance linear motor.

Further, according to the above technique disclosed in Japanese Patent No. 4580847, when the linear motors are arranged in a multi-axis manner to form a linear motor unit, it is necessary to prevent leakage flux from each of the linear motors. Accordingly, the magnetic shield plates are interposed between the linear motors during assembly, which complicates the assembly process. Since the unit of linear motors arranged in a multi-axis manner has poor heat dissipation, size reduction and space saving of the linear motor are difficult.

Further, according to the above technique disclosed in Japanese Patent No. 4385406, the linear motors are arranged in a multi-axis manner to form the module, and a linear guide is provided on a frame of a separate component. As a result, the assembly process is complicated and the weight of the linear motor module is increased.

### SUMMARY

The present invention has been made in order to solve such problems. An object of the present invention is to provide a linear motor which achieves low cost and high performance, accommodates size reduction, space saving, weight reduction, and has high heat dissipation.

According to an aspect of the invention, a linear motor includes an exciter that includes a plurality of permanent magnets in a shaft, an armature that surrounds the exciter and includes a plurality of coils, and a frame that houses the armature.

The armature houses the plurality of coils in a magnetic tube which has a linear opening.

According to the above aspect of the invention, the armature surrounds the exciter that includes the permanent magnets. The armature houses the plurality of coils in the magnetic tube. The magnetic tube has the linear opening.

The magnetic tube is a cylindrical body made of a magnetic material and can be easily manufactured, thereby achieving low cost and high performance. The magnetic tube closes a majority of magnetic flux of the permanent magnets so as to prevent flux leakage, thereby eliminating a need for a magnetic shield plate and accommodating size reduction, space saving, and weight reduction. The motor can be easily manufactured since the lead wires can be easily connected through the linear opening of the magnetic tube. In addition, the linear opening serves as a cooling passage, thereby allowing for high heat dissipation.

### BRIEF DESCRIPTION OF THE DRAWINGS

FIG. 1 is a perspective view of a linear motor according to an embodiment 1.
FIG. 2 is a perspective view of an exciter of the linear motor according to the embodiment 1.
FIG. 3 is a perspective view of a first example of an armature of the linear motor according to the embodiment 1.
FIG. 4 is a perspective view of a first example of a frame of the linear motor according to the embodiment 1.
FIG. 5 is a front view of an open state of the frame of the linear motor according to the embodiment 1.
FIG. 6 is a perspective view of a second example of the frame of the linear motor according to the embodiment 1.
FIG. 7 is a perspective view of a third example of the frame of the linear motor according to the embodiment 1.
FIG. 8 is a perspective view of a fourth example of the frame of the linear motor according to the embodiment 1.
FIG. 9 is a front view of the linear motor according to the embodiment 1.
FIG. 10 is a perspective view of the linearmotor according to an embodiment 2.
FIG. 11 is a perspective view of a second example of the armature of the linear motor according to the embodiment 2.
FIG. 12 is a perspective view of a third example of the armature of the linear motor according to the embodiment 2.
FIG. 13 is a perspective view of a fifth example of the frame of the linear motor according to the embodiment 2.
FIG. 14 is a perspective view of a sixth example of the frame of the linear motor according to the embodiment 2.
FIG. 15 is a perspective view of a linear motor unit according to an embodiment 3.

### DETAILED DESCRIPTION

With reference to the drawings, a linear motor and a linear motor unit according to embodiments 1 to 3 will be described below.

In the linear motor and the linear motor unit according to the embodiments 1 to 3, an exciter which includes permanent magnets is surrounded by a plurality of coils, and the coils are housed in a magnetic tube which has a linear opening. The magnetic tube is a cylindrical body made of a magnetic material and can be easily manufactured. The magnetic tube closes a majority of magnetic flux of the permanent magnets so as to prevent flux leakage, thereby eliminating a need for a magnetic shield plate. The linear opening of the magnetic tube serves as a coil lead wire processing section and a cooling passage.

According to the embodiments 1 to 3, it is possible to provide a linear motor which achieves low cost and high performance, accommodates size reduction, space saving, weight reduction, and has high heat dissipation.

### [Embodiment 1]

### <Configuration of linear motor>

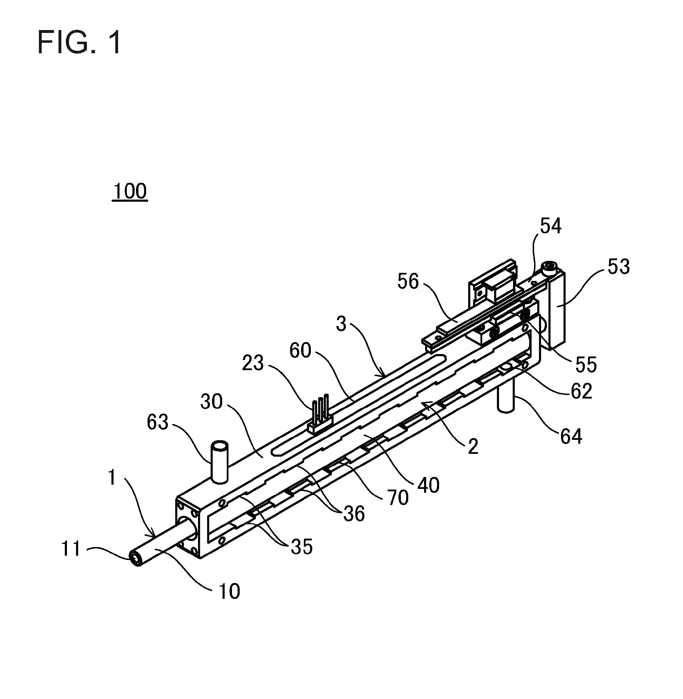

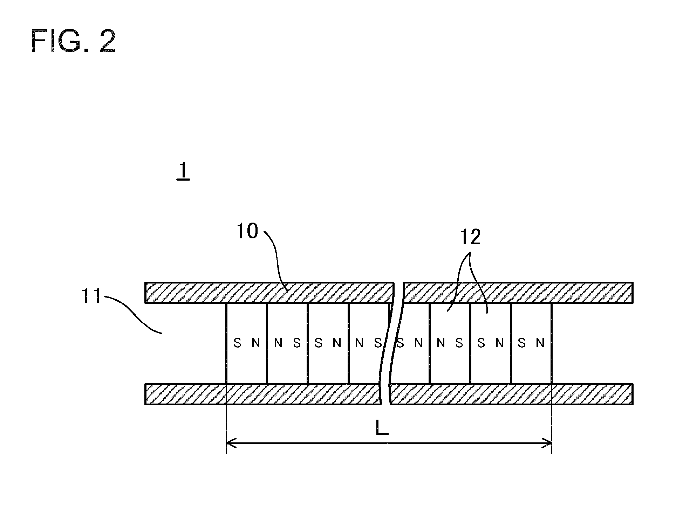

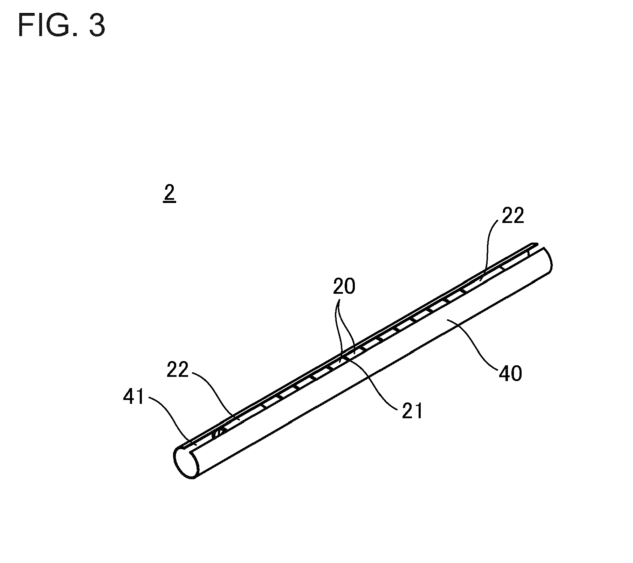

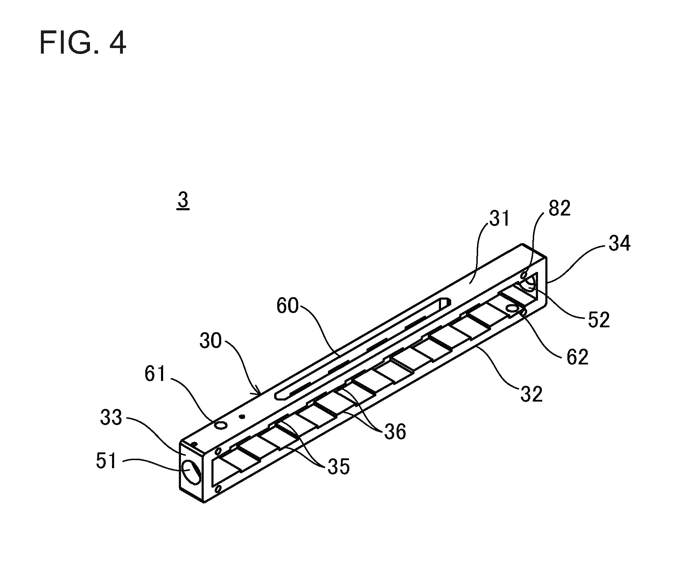

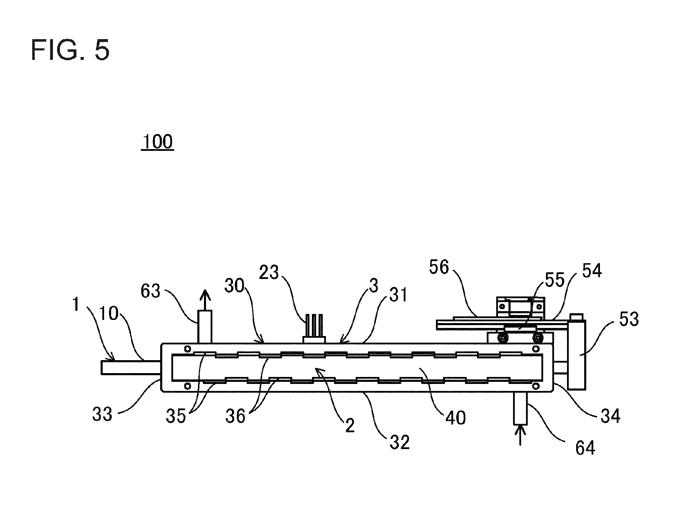

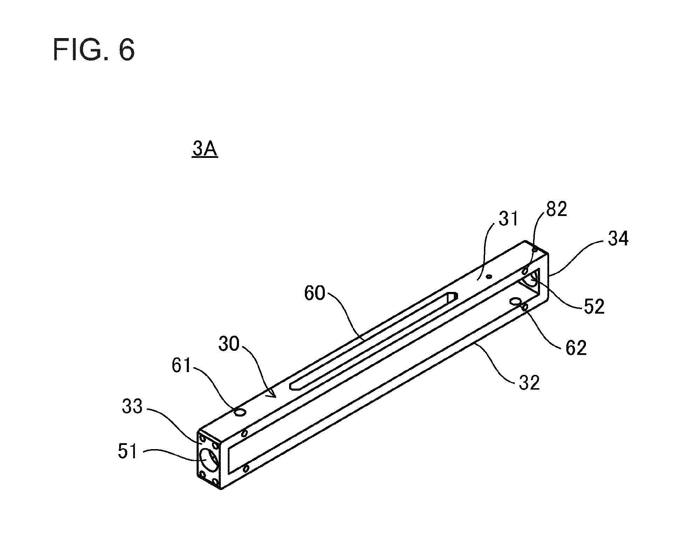

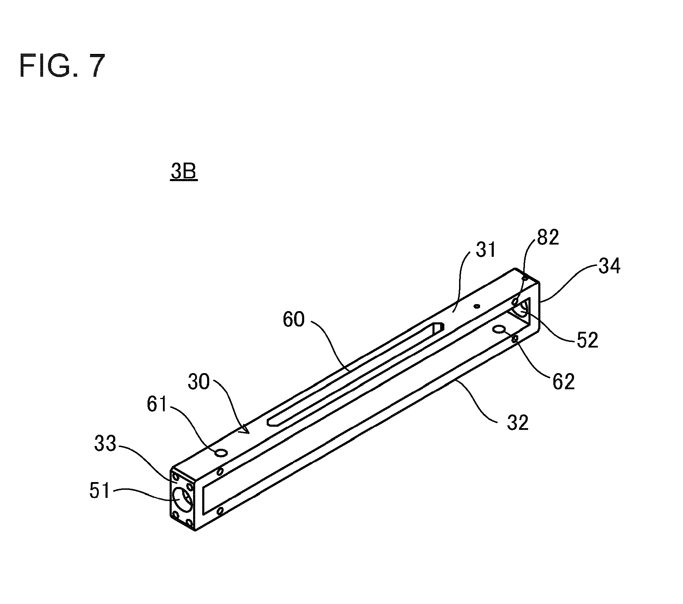

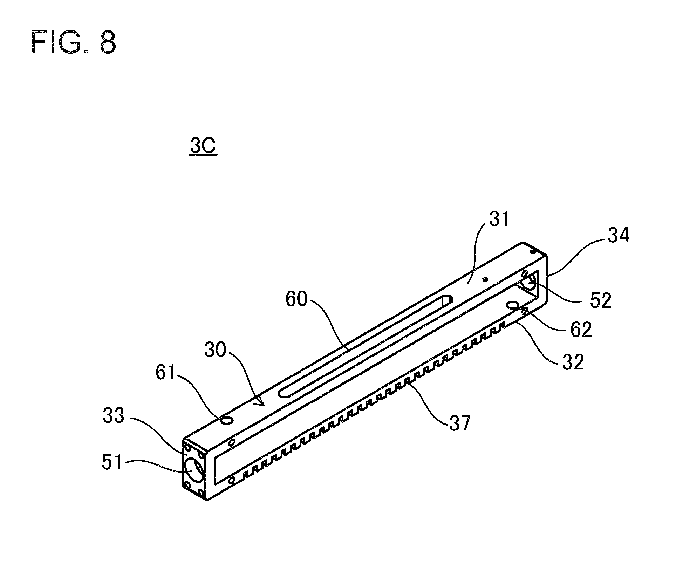

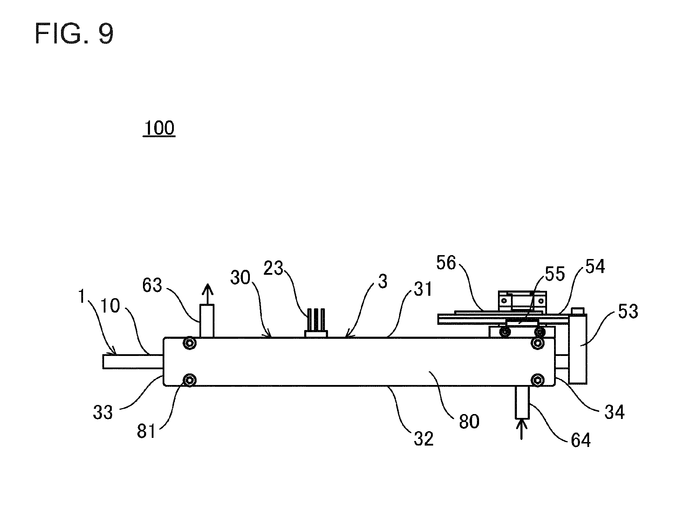

With reference to FIGS. 1 through 9, a configuration of a linear motor according to the embodiment 1 will be described below. FIG. 1 is a perspective view of a linear motor according to the embodiment 1. FIG. 2 is a perspective view of an exciter of the linear motor according to the embodiment 1. FIG. 3 is a perspective view of an armature of the linear motor according to the embodiment 1. FIG. 4 is a perspective view of a first example of a frame of the linear motor according to the embodiment 1. FIG. 5 is a front view of an open state of the frame of the linear motor according to the embodiment 1. FIG. 6 is a perspective view of a second example of the frame of the linear motor according to the embodiment 1. FIG. 7 is a perspective view of a third example of the frame of the linear motor according to the embodiment 1. FIG. 8 is a perspective view of a fourth example of the frame of the linear motor according to the embodiment 1. FIG. 9 is a front view of the linear motor according to the embodiment 1.

As shown in FIG. 1, a linear motor 100 according to the embodiment 1 includes an exciter 1, an armature 2 and a frame 3.

As shown in FIGS. 1 and 2, the exciter 1 includes a shaft 10 and permanent magnets 12. In the embodiment 1, the exciter 1 serves as a movable element.

The shaft 10 is a cylindrical metal member having a hollow section 11. The material of the shaft 10 may include, but is not limited to, a non-magnetic material such as austenitic stainless steel.

A plurality of permanent magnets 12 in a cylindrical shape are arranged in series in an axis direction in the hollow section 11 of the shaft 10. The permanent magnets of this embodiment are magnetized so that the same magnetic poles are opposed each other (N-N, S-S) in the axis direction. A soft magnetic material, which is not shown in the figure, may be interposed between the opposed magnetic poles of the permanent magnets 12, 12.

As shown in FIGS. 1 and 3, the armature 2 includes coils 20 and a magnetic tube 40. In the embodiment 1, the armature 2 serves as a stator.

The shaft 10 which includes the permanent magnets is surrounded by a plurality of coils 20 which are arranged in series. Each coil 20 is formed as a ring coil in a cylindrical shape. Electrically insulative spacers 21 are interposed between the coils 20, 20.

Guide support tubes 22 in a cylindrical shape are disposed at both ends of the plurality of coils 20. The guide support tube 22 houses a guide bush (not shown) of the shaft 10. The guide bush may be housed in the frame 3 which will be described later.

The plurality of coils 20 are arranged in sequence of the U-phase, the V-phase and the W-phase in the axis direction, for example, to correspond to a three phase AC power supply. The coils 20 in each of the U-phase, the V-phase and the W-phase are connected to each other by lead wires, which are not shown in the figure.

The magnetic tube 40 is a magnetic metal member which has a linear opening 41 that extends in the axis direction. The magnetic tube 40 surrounds the periphery of the plurality of coils 20. The coils 20 in the magnetic tube 40 are connected to the guide support tubes 22.

The magnetic tube 40 has a length longer than an entire length L of the plurality of permanent magnets 12 of the shaft 10 disposed in the coils 20. Specifically, the magnetic tube 40 has a length no less than the entire length L of the plurality of permanent magnets 12 plus two times of the stroke length.

The magnetic tube 40 closes a majority of the magnetic flux of the permanent magnets 12 of the shaft 10 so as to prevent flux leakage. The linear opening 41 of the magnetic tube 40 defines a portion through which the lead wires of the coils 20 extend and serves as a cooling passage.

The magnetic tube 40 according to the embodiment 1 has a substantially cylindrical shape. The linear opening 41 of this embodiment is formed as an aperture which is open to a portion (upper part) of the magnetic tube 40 and extends in the axis direction. Although the linear opening 41 is formed only on the upper part of the magnetic tube 40, it may be formed on the lower part of the magnetic tube 40.

The material of the magnetic tube 40 may be an iron magnetic material such as carbon steel for machine structural use. In order to ensure effective performance and cost, the material of the magnetic tube 40 preferably includes, but is not limited to, a silicon steel sheet formed by sheet metal forming or press forming process.

As shown in FIGS. 1, 4 and 5, the frame 3 is a rectangular frame member that houses the exciter 1 and the armature 2. FIGS. 4 and 5 show the frame 3 of the first example. The frame 3 surrounds the armature 2 at the upper and lower sides in the radial direction and both ends in the axis direction of the armature 2. A frame body 30 which is formed as a rectangular frame is composed of an upper frame 31, a lower frame 32, and end frames 33, 34 in the longitudinal direction (which corresponds to the axis direction) . The right and left side faces of the frame body 30 in the width direction are open.

The material of the frame 3 may include, but is not limited to, an aluminum or aluminum alloy which is easily processed. The frame 3 may be easily formed, for example, by a plastic forming process such as an extrusion process.

Through holes 51, 52 are open to the end frames 33, 34 in the longitudinal direction (which corresponds to the axis direction) of the frame body 30 so as to support the shaft 10 of the exciter 1 which is inserted through the through holes 51, 52. The distal end of the shaft 10 is connected to a block member 53 formed in a rectangular prism shape which extends in the vertical direction. The upper end of the block member 53 is connected to an extension member 54 which is disposed along the upper frame 31 of the frame body 30.

The extension member 54 extends back to the side of the frame 3 via the block member 53. The extension member 54 is slidably movable on a guide block 55 which has a U-shaped cross section. A linear encoder 56 is disposed on the extension member 54 so as to detect a position of the linear axis and output positional information.

The linear encoder 56 is disposed at a position spaced from the armature 2 which includes the coils 20 taking into consideration the effect of magnetism and heat. The linear encoder 56 may be of any type such as a magnetic or optical type. In order to ensure stable driving and high quality, the movable element of the linear encoder 56 is desirably disposed at a position on or adjacent to the linear guide such as an LM guide and ball spline.

Further, an elongated hole 60 is open to the upper frame 31 of the frame body 30. The elongated hole 60 defines a space in which the lead wires of the coils 20 are connected and serves as a portion through which connection terminals 23 extend as well as a cooling air passage.

On the inner surface of the upper frame 31 and the lower frame 32 of the frame body 30, recesses 35 that form a cooling passage and raised portions 36 that are provided for securing the magnetic tube are alternately disposed in the axis direction. Since the inner surface of the upper frame 31 and the lower frame 32 has raised and recessed portions, some part of the inner surface of the upper frame 31 and the lower frame 32 is in contact with the magnetic tube 40 and some part is not. The magnetic tube 40 is secured on the contact area of the raised portions 36 by using an additive or filler 70 such as mold material and the armature 2 which includes the coils 20 is cooled by heat transmission of the contact area. The recesses 35 that are not in contact with the magnetic tube 40 serve as a cooling passage. The recesses 35 of the upper frame 31 and the recesses 35 of the lower frame 35 are offset in the axis direction so that the upper recesses 35 and the lower recesses 35 partially overlap each other. Accordingly, a generally spiral shaped cooling passage is formed between the magnetic tube 40 and the frame 3.

Taps (through holes) 61, 62 are formed by drilling the upper frame 31 and the lower frame 32 of the frame body 30 as the inlet and outlet which allow a cooling air to flow into and from the cooling passage which is formed in a generally spiral shape. The taps 61 and 62 on the upper frame 31 and the lower frame 32 are disposed at generally diagonal positions which are eccentric from the center of the frame in the width direction. In this embodiment, the taps 61, 62 are connected to short tubes 63, 64, respectively. In this embodiment, the short tube 64 on the lower frame 32 serves as an inlet for a cooling air, and the short tube 63 on the upper frame 31 serves as an outlet for a cooling air, but the short tubes 63, 64 may be provided vice versa.

In a frame 3A of the second example shown in FIG. 6, a frame 3B of the third example shown in FIG. 7, and a frame 3C of the fourth example shown in FIG. 8, the inner surface of the upper frame 31 and the lower frame 32 of the frame body 30 is formed to be flat. Even if the inner surface of the upper frame 31 and the lower frame 32 is flat, gaps are formed at four corners of the frames 3A, 3B, 3C, since the magnetic tube 40 having a generally cylindrical shape is housed in the frames 3A, 3B, 3C. The gaps at four corners communicate with the linear opening (aperture) 41 which is located on the upper part of the magnetic tube 40 such that a cooling passage is formed as a whole.

The taps 61 and 62 on the frame 3A of the second example and the frame 3C of the fourth example are disposed at generally diagonal positions which are eccentric from the center of the upper frame 31 and the lower frame 32 in the width direction. The taps 61 and 62 on the frame 3B of the third example are disposed at the center of the upper frame 31 and the lower frame 32 in the width direction.

In the frame 3C of the fourth example, a heat dissipation fin 37 is formed on the outer surface of the lower frame 32, thereby enhancing heat dissipation on the side of the lower frame 32.

As shown in FIGS. 1 and 4 through 9, screw holes 82 through which bolts 81 are screwed are disposed on both ends of the upper frame 31 and the lower frame 32. When the linear motor 100 of this embodiment is used as a single-axis actuator or a unit of multi-axis actuator, which will be described later, open areas on the right and left sides in the width direction of the frame body 30 are sealed by inserting and fastening the bolts 81 through the screw holes 82 via the sealing plates 80.

### <Operation of linear motor>

With reference to FIGS. 1 through 9, an operation of the linear motor 100 according to the embodiment 1 will be described.

As shown in FIG. 1, the exciter 1 of the linear motor 100 according to the embodiment 1 includes a plurality of permanent magnets which are magnetized so that the same magnetic poles are opposed each other (N-N, S-S) in the axis direction in the hollow section 11 of the shaft 10. The armature 2 surrounds the shaft 10 which includes the permanent magnets and includes a plurality of coils 20 arranged in the axis direction. The coils 20 are disposed, for example, so as to correspond to the U-phase, the V-phase and the W-phase of the three phase power supply and an electric current is supplied to the coils 20 of the U-phase, the V-phase and the W-phase with the phase shifted.

In the embodiment 1, the exciter 1 serves as amovable element, and the armature 2 serves as a stator. That is, in the linear motor 100 of this embodiment, an electric current is supplied to the coils 20 of the armature 2 so as to intersect with the magnetic flux generated by the permanent magnets of the exciter 1. When the magnetic flux of the permanent magnets and the electric current which flows in the coils 20 of the armature 2 intersect with each other, the linear motor 100 of this embodiment generates the thrust to the shaft 10 which includes the permanent magnets in the axis direction by electromagnetic induction so as to move the shaft 10 in linear motion.

In the linear motor 100 according to the embodiment 1, the coils 20 of the U-phase, the V-phase and the W-phase are arranged in series in the axis direction in the magnetic tube 40 which has the linear opening (aperture) 60. With the lead wires of the coils 20 of the U-phase, the V-phase and the W-phase extending to the outside the magnetic tube 40 through the linear opening (aperture) 60, the magnetic tube 40 is housed in the frame 3 which is made of aluminum.

The magnetic tube 40 has a length longer than the entire length L of the plurality of permanent magnets 12 of the shaft 10 disposed in the coils 20 and no less than the entire length L of the plurality of permanent magnets 12 plus two times of the stroke length. The flux leakage from the permanent magnets 12 of the shaft 10 is closed by the magnetic tube 40 so that flux leakage hardly occurs. Accordingly, as described later, even if the linear motors 100 of this embodiment are arranged in a multi-axis manner, magnetic effect between the linear motors can be minimized.

The frame body 30 is a rectangular frame composed of the upper frame 31, the lower frame 32, and the end frames 33, 34 in the longitudinal direction. The elongated hole 60 is open to the upper frame 31. The elongated hole 60 defines a space in which the lead wires of the coils 20 of the U-phase, the V-phase and the W-phase are connected. The lead wire connection terminals 23 are exposed through the elongated hole 60.

The magnetic tube 40 is secured on the contact area of the inner surface of raised portion 36 of the lower frame 32 via the filler 70, and accordingly the armature 2 which includes the coils 20 can be cooled by heat transmission of the contact area.

On the inner surface of the upper frame 31 and the lower frame 32 of the frame body 30, the recesses 35 and the raised portions 36 are alternately disposed. The recesses 35 on the upper frame 31 and the recesses 35 on the lower frame 35 form a generally spiral shaped cooling passage between the magnetic tube 40 and the frame 3. Accordingly, the linear motor 100 of this embodiment has high heat dissipation.

The taps 61, 62 through which a cooling air flows into and from the cooling passage are formed by drilling the upper frame 31 and the lower frame 32 of the frame body 30. The taps 61, 62 are connected to the short tubes 63, 64, respectively. A cooling air is allowed to flow into the short tube 64 and from the short tube 63 so that an air flow is generated inside the frame 3. Acooling air which passes through a gap between the recesses 35 on the frame body 30 and the magnetic tube 40 generates a rotating turbulent flow, thereby effectively cooling the armature 2 which includes the coils 20.

In the frame 3A of the second example shown in FIG. 6, the inner surface of the upper frame 31 and the lower frame 32 is a flat surface without raised and recessed portions, and the taps 61, 62 are eccentric from the center of the frame in the width direction. The frame 3A of the second example has a simple configuration and can be manufactured with low cost. In the frame 3A of the second example, a cooling air flows through the gap between the inner surface of the frame body 30 and the peripheral surface of the magnetic tube 40.

In the frame 3B of the third example shown in FIG. 7, the inner surface of the upper frame 31 and the lower frame 32 is a flat surface without raised and recessed portions, and the taps 61, 62 are located at the center of the frame in the width direction. The frame 3B of the third example has a simple configuration and can be manufactured with low cost. In the frame 3B of the third example, a cooling air flows through the gap between the inner surface of the frame body 30 and the peripheral surface of the magnetic tube 40. In the frame 3B of the third example, a larger amount of cooling air flows in the axis direction through the linear opening (aperture) 41 of the magnetic tube 40. Further, the coils 20 are directly cooled through the linear opening (aperture) 41 of the magnetic tube 40. A cooling air flows through a gap between the inner surface of the frame body 30 and the peripheral surface of the magnetic tube 40.

In the frame 3C of the fourth example shown in FIG. 8, the inner surface of the upper frame 31 and the lower frame 32 is a flat surface without raised and recessed portions, and the taps 61, 62 are eccentric from the center of the frame in the width direction. In the frame 3C of the fourth example, a cooling air flows through the gap between the inner surface of the frame body 30 and the peripheral surface of the magnetic tube 40. Further, the heat dissipation fin 37 is formed on the outer surface of the lower frame 32 and accordingly a large cooling effect is achieved on the side of the lower frame 32.

That is, according to the linear motor 100 of the embodiment 1, the armature 2 surrounds the exciter 1 that is formed by the shaft 10 which includes the permanent magnets 12. The armature 2 houses a plurality of coils 20 in the magnetic tube 40 which has a linear opening.

The magnetic tube is a cylindrical body made of a magnetic material and can be easily manufactured by sheet metal forming or press forming of a silicon steel sheet. Further, the frame 3 can be easily manufactured, for example, by an extrusion process. Accordingly, the linear motor 100 of this embodiment can achieve low cost and high performance.

Further, the magnetic tube 40 closes a majority of magnetic flux of the permanent magnets 12 so as to prevent flux leakage, thereby eliminating a need for a magnetic shield plate, and accommodating size reduction, space saving, and weight reduction.

The shaft 10 which includes the permanent magnets 12 is surrounded by the coils 20 formed in a ring shape. The coils 20 are housed in the magnetic tube 40 which has the linear opening 41. Accordingly, in the linear motor 100 according to the embodiment 1, the magnetic tube 40 closes a majority of the magnetic flux of the permanent magnets 12 so as to prevent flux leakage.

A space for connecting the lead wires of the coils 20 can be provided since the lead wires of the coils 20 are introduced into the elongated hole 60 of the upper frame 31 through the linear opening 41.

The magnetic tube 40 has the linear opening 41, and a gap is formed between the recesses 35 on the upper frame 31 and the lower frame 32 and the peripheral surface of the magnetic tube 40 so as to serve as a cooling passage. The right and left side open areas of the frame body 30 are sealed by the sealing plates 80, thereby forming a generally spiral shaped cooling passage. The armature 2 which includes the coils 20 can be cooled by introducing a cooling air into the generally spiral shaped cooling passage. Accordingly, the linear motor 100 of this embodiment has high heat dissipation.

The linear motor 100 of this embodiment can be used as a single-axis actuator since the linear motor 100 includes its own linear encoder 56. Moreover, a multi-axis actuator can be formed by combining a plurality of linear motors 100 of this embodiment.

Therefore, a head configuration of the chip mounter can be flexible since the linear motor 100 of this embodiment can be used as a single-axis or multi-axis actuator.

### [Embodiment 2]

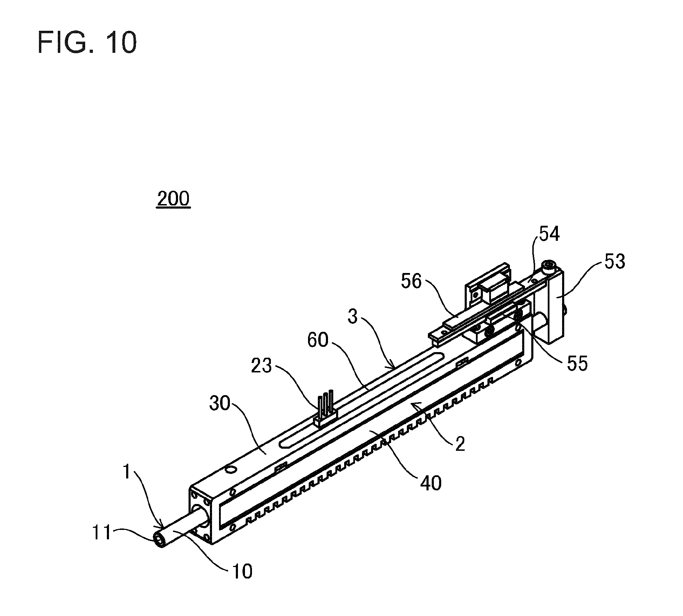

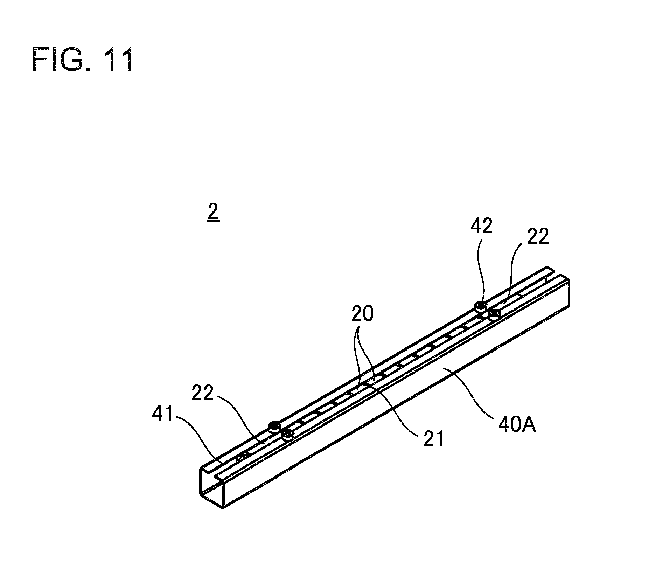

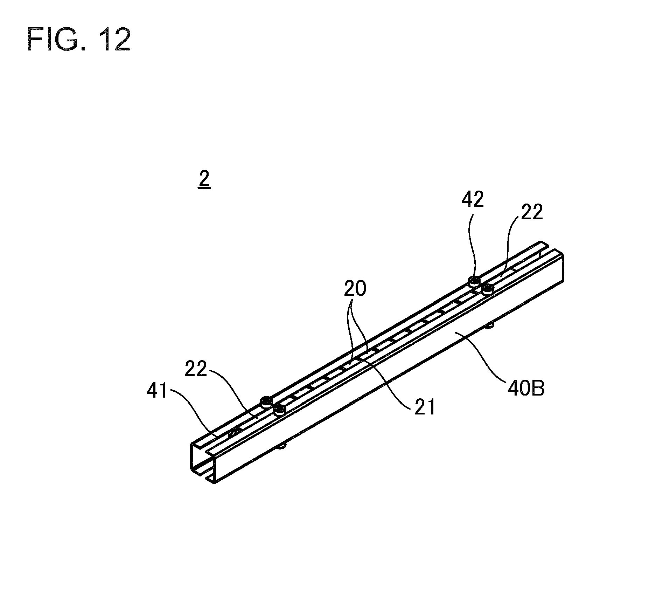

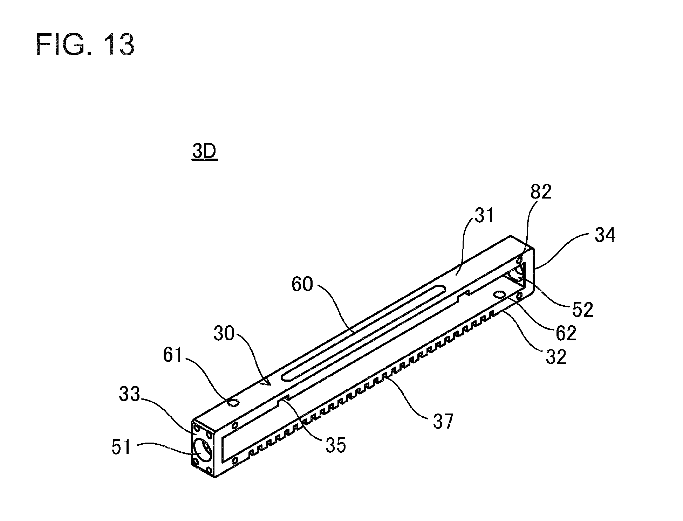

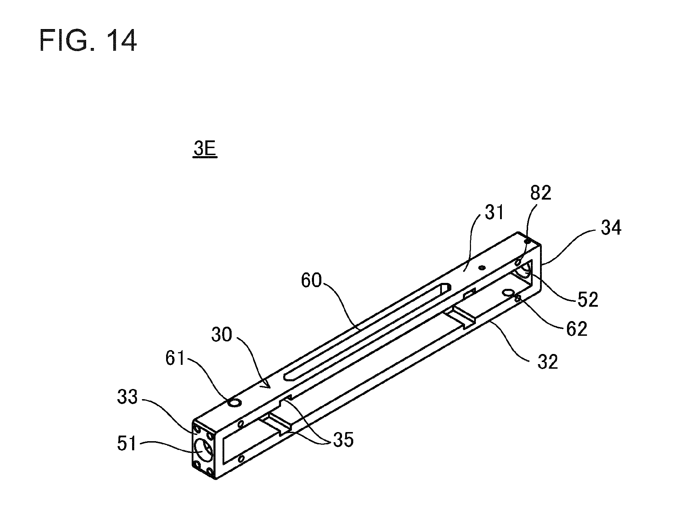

With reference to FIGS. 10 through 14, a linear motor 200 according to the embodiment 2 will be described. FIG. 10 is a perspective view of the linear motor according to the embodiment 2. FIG. 11 is a perspective view of a second example of the armature of the linear motor according to the embodiment 2. FIG. 12 is a perspective view of a third example of the armature of the linear motor according to the embodiment 2. FIG. 13 is a perspective view of a fifth example of the frame of the linear motor according to the embodiment 2. FIG. 14 is a perspective view of a sixth example of the frame of the linear motor according to the embodiment 2. The same elements as those of the linear motor 100 of the embodiment 1 are denoted by the same reference numbers, and the description of those elements will be omitted.

As shown in FIG. 10, the linear motor 200 according to the embodiment 2 has a configuration same as that of the embodiment 1 except for a configuration of the magnetic tube 40 of the armature 2 and the frame 3.

That is, the linear motor 200 according to the embodiment 2 includes the exciter 1, the armature 2 and the frame 3. The exciter 1 includes a plurality of permanent magnets 12 in the hollow section 11 of the shaft 10 with the same configuration as that of the first embodiment (see FIG. 2).

The armature 2 includes the coils 20 and the magnetic tube 40. In the embodiment 2, the armature 2 serves as a stator (see FIGS. 11 and 12).

The shaft 10 which includes the permanent magnets is surrounded by a plurality of coils 20 which are arranged in series with the same configuration as that of the embodiment 1.

The magnetic tube 40 according to the embodiment 2 has a generally rectangular tubular shape. The magnetic tube 40A of the second example shown in FIG. 11 has a linear opening 41 which extends in the axis direction only on the upper part of the magnetic tube 40A. The linear opening 41 is formed as an aperture which is open in the axis direction on the upper part of the magnetic tube 40A.

The magnetic tube 40B of the third example shown in FIG. 12 has linear openings 41 which extend in the axis direction on the upper and lower parts of the magnetic tube 40B. The linear openings 41 are formed as apertures which are open in the axis direction on the upper and lower parts of the magnetic tube 40B.

The magnetic tubes 40A, 40B surround the plurality of coils 20. The coils 20 in the magnetic tubes 40A, 40B are connected to the guide support tubes 22. The coils 20 are held at the center of the magnetic tubes 40A, 40B by inserting and fastening bolts 42 at the upper and lower parts of the magnetic tubes 40A, 40B. The magnetic tubes 40A, 40B are magnetically balanced to the shaft 10 which includes the permanent magnets 12 at the center portion. Further, the magnetic tubes 40A, 40B close a majority of the magnetic flux of the permanent magnets 12 so as to prevent flux leakage.

Since the ring shaped coils 20 are housed at the center in the magnetic tubes 40A, 40B having a rectangular tubular shape, gaps are formed at four corners of the magnetic tubes 40A, 40B. The gaps at four corners serve as cooling passages so that the coils 20 can be directly cooled. The linear opening 41 on the upper part of the magnetic tubes 40A, 40B defines a portion through which the lead wires of the coils 20 extend and serves as a cooling passage.

The magnetic tubes 40A, 40B has a length no less than the entire length L of the plurality of permanent magnets 12 plus two times of the stroke length as similar to the embodiment 1.

The material of the magnetic tubes 40A, 40B preferably include, but is not limited to, a silicon steel sheet formed by sheet metal forming or press forming process as similar to the embodiment 1.

Referring back to FIG. 10, the frame 3 surrounds the armature 2 at the upper and lower sides in the radial direction and both ends in the axis direction of the armature 2 as similar to the embodiment 1. The frame body 30 which is formed as a rectangular frame is composed of the upper frame 31, the lower frame 32, and end frames 33, 34 in the longitudinal direction (which corresponds to the axis direction) of the frame body 30. The right and left side faces of the frame body 30 in the width direction are open.

The material of the frame 3 may include, but is not limited to, an aluminum or aluminum alloy which is easily processed as similar to the embodiment 1.

The upper frame 31 of the frame body 30 includes the elongated hole 60 which serves as a connection space for lead wires with the same configuration as that of the embodiment 1. The elongated hole 60 serves as a passage for the connection terminals 23 and a passage for a cooling air.

In the frame 3D of the fifth example shown in FIG. 13, the inner surface of the upper frame 31 of the frame body 30 is formed to be generally flat, and the recesses 35 are formed on both sides of the elongated hole 60. The inner surface of the lower frame 32 of the frame body 30 is formed to be flat. The frame 3D of the fifth example is suitable to house the magnetic tube 40A of the second example shown in FIG. 11. The recesses 35 on the upper frame 31 communicate with the linear opening (aperture) 41 located on the upper part of the magnetic tube 40A such that a cooling passage is formed as a whole.

In the frame 3D of the fifth example, the taps (through holes) 61, 62 are formed on the upper frame 31 and the lower frame 32 as the inlet and outlet which allow a cooling air to flow into and from the cooling passage. The taps 61 and 62 on the upper frame 31 and the lower frame 32 are disposed at generally diagonal positions which are eccentric from the center of the frame in the width direction.

In the frame 3D of the fifth example, the heat dissipation fin 37 having continuous recessed and raised portions is formed on the outer surface of the lower frame 32. Accordingly, although the recesses 35 are formed only on the inner surface of the upper frame 31, the heat dissipation fin 37 can enhance heat dissipation on the side of the lower frame 32.

In the frame 3E of the sixth example shown in FIG. 14, the inner surface of the upper frame 31 of the frame body 30 is formed to be generally flat, and the recesses 35 are formed on both sides of the elongated hole 60. The inner surface of the lower frame 32 of the frame body 30 is formed to be generally flat, and two recesses 35 are formed to oppose the recesses 35 on the upper frame 31.

The frame 3E of the sixth example is suitable to house the magnetic tube 40B of the third example shown in FIG. 12. The recesses 35 on the upper frame 31 and the lower frame 32 communicate with the linear opening (aperture) 41 located on the upper and lower parts of the magnetic tube 40B such that a cooling passage is formed as a whole.

In the frame 3E of the sixth example, the taps 61, 62 are formed on the upper frame 31 and the lower frame 32, respectively, with the same configuration as that of the frame 3D of the fifth example. In the frame 3E of the sixth example, the recesses 35 are formed on the inner surface of the upper frame 31 and the lower frame 32. Accordingly, unlike the frame 3D of the fifth example, the frame 3E of the sixth example does not have the heat dissipation fin.

As shown in FIGS. 10, 13 and 14, the shaft 10 of the exciter 1 is supported by the through holes 51, 52 on both end frames 33, 34 of the frame body 30. The distal end of the shaft 10 is connected to the block member 53 and the extension member 54 in sequence as similar to the embodiment 1. The extension member 54 is slidably movable on the guide block 55, and the linear encoder 56 is disposed on the extension member 54.

When the linear motor 200 of this embodiment is used as a single-axis actuator or a unit of multi-axis actuator, which will be described later, open areas on the right and left sides in the width direction of the frame body 30 are sealed by the sealing plates 80 as similar to the embodiment 1 (see FIG. 8).

The linear motor 200 according to the embodiment 2 has basically the same effect as that of the embodiment 1. Specifically, in the linear motor 200 according to the embodiment 2, gaps are formed at four corners of the magnetic tubes 40A, 40B since the ring shaped coils 20 are housed in the magnetic tubes 40A, 40B having a rectangular tubular shape. Accordingly, the linear motor 200 according to the embodiment 2 has the specific effect that the gaps at four corners of the magnetic tubes 40A, 40B serve as cooling passages so that the coils 20 can be directly cooled by the cooling air.

### [Embodiment 3]

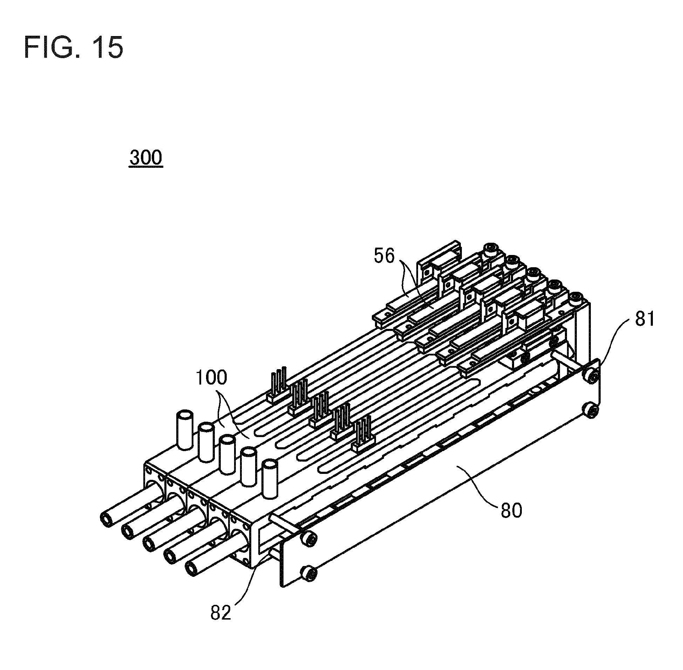

With reference to FIG. 15, a linear motor unit 300 according to the embodiment 3 will be described. FIG. 15 is a perspective view of the linear motor unit 300 according to the embodiment 3. The same elements as those of the linear motor of the embodiment 1 are denoted by the same reference numbers, and the description of those elements will be omitted.

As shown in FIG. 15, the linear motor unit 300 according to the embodiment 3 is a unit formed by the linear motors 100 of the embodiment 1 arranged side by side in the width direction (ridge direction).

The screw holes 82 through which the bolts 81 are screwed are disposed on both ends of the upper frame 31 and the lower frame 32 as similar to the embodiment 1. A plurality of linear motors 100 are arranged side by side in the width direction with being in contact with each other, and the sealing plates 80 are positioned on both sides in the width direction. Then, the plurality of linear motors 100 are combined as a multi-axis unit by inserting and fastening the long bolts 81 through the screw holes 82 of the plurality of linear motors 100 via the sealing plates 80. The open areas on the right and left sides in the width direction of the linear motor unit 300 of this embodiment are sealed.

Although the width dimension of the frame 3 is a requirement dimension of a tape feeder, the outer diameter or the width of the magnetic tube 40 is set to be smaller than the width dimension of the frame body 30. Accordingly, when the plurality of linear motors 100 are arranged in a multi-axis manner in the width direction, the linear motor unit (head module) 300 can be easily assembled by simply arranging the linear motors 100 along the side face of the frame 3.

Moreover, when the plurality of linear motors 100 are arranged in a multi-axis manner, the right and left sides in the width direction of the linear motors 100 are sealed. As a result, leakage of cooling air is reduced, an air flow is spontaneously generated, and the cooling effect of the linear motor unit 300 of this embodiment is increased.

Although the plurality of linear motors 100 is in contact with each other, a gap is formed between adjacent magnetic tubes 40, 40. The gap between adjacent magnetic tubes 40, 40 is not only advantageous for cooling, but also suppresses the magnetic effect between each other.

Each of the linear motors 100 has the linear encoder 56, and accordingly positional information of the linear motors 100 can be individually obtained.

Although the linear motor 100 of the embodiment 1 is used to describe the configuration of the linear motor unit 300, the linear motor 200 of the embodiment 2 may be used.

The linear motor unit 300 according to the embodiment 3 has basically the same effect as that of the embodiment 1. Specifically, since the embodiment 3 provides a multi-axis actuator with the linear motors arranged in the width direction, the embodiment 3 has a specific effect that the linear motor unit 300 having high thrust and formed in a small size (narrow width) at low cost can be provided as the Z axis of a chip mounter.

Although the preferred embodiments of the present invention have been described, those embodiments are merely illustrative and the present invention is not intended to be limited to those embodiments. The present invention may be implemented in various ways in addition to the above described embodiments without departing from the spirit of the invention.

## Claims

1. A linear motor comprising:
an exciter that includes a plurality of permanent magnets in a shaft;
an armature that surrounds the exciter and includes a plurality of coils; and
a frame that houses the armature;
wherein the armature houses the plurality of coils in a magnetic tube which has a linear opening.

2. The linear motor as claimed in claim 1, wherein the linear opening is formed at least on part of the magnetic tube.

3. The linear motor as claimed in claim 1 or 2, wherein the magnetic tube is formed in a rectangular tubular shape or a cylindrical shape.

4. The linear motor as claimed in any preceding claim, wherein a length of the magnetic tube is no less than an entire length of the permanent magnets of the shaft plus two times of the stroke length.

5. The linear motor as claimed in any preceding claim, wherein a lead wire of the plurality of coils is exposed to an outside of the magnetic tube through the linear opening of the magnetic tube.

6. The linear motor as claimed in any preceding claim, wherein a body of the frame is formed as a rectangular frame and includes an upper frame, a lower frame, and end frames in a longitudinal direction of the frame.

7. The linear motor as claimed in any preceding claim, wherein an elongated hole which serves as a space in which the lead wire of the plurality of coils are connected is open to the upper frame of the frame body.

8. The linear motor as claimed in any preceding claim, wherein a recess is formed on an inner surface of the upper frame and/or the lower frame of the frame body.

9. The linear motor as claimed in claim 1 wherein the recess on the inner surface of the upper frame and the recess on the inner surface of the lower frame are offset in the longitudinal direction so as to at least partially overlap each other.

10. The linear motor as claimed in any preceding claim, wherein a heat dissipation fin having continuous recessed and raised portions on part of an outer surface of the frame body.

11. The linear motor as claimed in any preceding claim, wherein a cooling passage is formed in a gap between a peripheral surface of the coil and an inner surface of the magnetic tube, the linear opening of the magnetic tube, gaps at four corners between the peripheral surface of the magnetic tube and the inner surface of the frame body, and/or a gap between the peripheral surface of the magnetic tube and the recess on the inner surface of the frame body.

12. The linear motor as claimed in any preceding claim, wherein an inlet and an outlet which allow a cooling air to flow into and from the cooling passage are formed on the upper frame and the lower frame of the frame body.

13. The linear motor as claimed in any preceding claim, wherein the magnetic tube is secured on the inner surface of the frame body via a filler.

14. The linear motor as claimed in any preceding claim, wherein a linear encoder is disposed on part of the frame.

15. A linear motor unit comprising:
a plurality of the linear motors as claimed in any one of claims 1 to 14 which are arranged in a width direction while being in contact with each other, and
a sealing plate disposed on each end face of the linear motors in the width direction,
wherein the sealing plate and the plurality of linear motors integrally form a multi-axis unit.
